# EUROPEAN PATENT APPLICATION

(11) **EP 0 693 679 A1**
(43) Date of publication of application: **24.01.1996**
(21) Application number: 95110823.2
(22) Date of filing: 11.07.1995
(51) Int. Cl.: G01N 15/14

(54) **Particle image sorting system**

(30) Priority: 18.07.1994 JP 164997/94
(71) Applicant: HITACHI, LTD., Chiyoda-ku, Tokyo 100 (JP)
(72) Inventor: Asai, Hideki, Mito-shi (JP); Horiuchi, Hideyuki, Abiko-shi (JP)
(74) Representative: Altenburg, Udo, Dipl.-Phys.

(57) **Abstract**

An automatic particle image sorting system having a function of picking up images of particles (22) in a liquid sample (23) and sorting the images automatically in accordance with a predetermined criterion, and a function of further sorting the automatically sorted images in accordance with a different predetermined criterion. In the system, the images sorted by a particle image sorting device (45) are stored in an image storage unit (9) together with the results of sorting, and the images designated by the user input and the results of sorting the images are displayed on a CRT display (20). A user inputs an instruction for resorting the images based on the display through a touch panel (26). The results of resorting are stored in a optical magnetic disk (14) together with the images.

## Description

### BACKGROUND OF THE INVENTION

The present invention relates to an automatic particle image sorting system, and more particularly to a system suitable for sorting images of particles contained in uric precipitates and blood cells, and furthermore to an automatic particle image sorting system having a function of further resorting automatically sorted particle images in accordance with predetermined criterion.

In a conventional particle image sorting apparatus described in JP-B-3-41783, an image of a liquid containing particles is picked up, and an image of objective particles is extracted from the image and displayed on a display unit. However, this apparatus has no function of deciding, i.e., identifying the type of the extracted image automatically.

In JP-A-3-100876, techniques related to a function of detecting an edge of a particle image and a function of extracting a particle image from a picked-up image are disclosed, but no technique related to automatic sorting of particle images based on a processed particle image is disclosed, thus identification and sorting of particle images have been performed by a user.

Further, according to a technique disclosed in JP-B-3-41783 and JP-A-60-38635, picked up images of particles are sorted based on predetermined criteria such as size of particle, image density and shape, but it has been impossible to identify the sorted particles. Namely, according to this technique, for example, it is possible to extract particles having a specific size, but the extracted particles include various types.

JP-A-58-52560 and JP-A-4-26711, discloses apparatus in that images of particles are sorted automatically, images and results of sorting of particles are stored in a storage device, and images and results of sorting of specific particles are read out of the storage device and displayed in accordance with the instruction by a user. In these apparatus, however, it is impossible to sort the images of particles in the storage device based on further detailed sorting criteria.

As described above, according to the prior art, although it is possible to sort particle images based on the features such as size, image density and shape, sorted individual particle cannot be identified. Since a user has to perform identifying operation related to respective particles through visual recognition, waste of time is caused.

### SUMMARY OF THE INVENTION

In order to achieve above-mentioned object, an automatic particle sorting system according to the present invention includes an input unit; a particle image sorting unit, the particle image sorting unit including a sorting unit for sorting particle images automatically based on information including data representing features of images of particles contained in a liquid and data representing optical characteristics of the particles and an image storage unit for storing images and results of sorting of the particles; a particle resorting unit, the particle resorting unit including a data file unit and an image display unit; means for displaying the images and the results of sorting of the particles on the image display unit based on a first instruction for designating the images and the results of sorting of the particles inputted into the input unit, i.e., stored in the image storage unit; and means for storing the displayed images together with the results of resorting, i.e., the displayed images and the results of resorting in the data file based on a second instruction for further sorting particles, the images and the results of sorting of which are displayed, inputted in the input unit.

Further, the system further includes means for transmitting the images and the results of sorting of the particles stored in the image storage portion to the data file unit, and for displaying the images and the results of sorting of the particles in the data file unit on the image display unit based on the first instruction.

Further, in the system, an image storage unit has the function of the data file portion.

Further, a particle resorting unit of the system is detachable from the particle sorting unit, and the particle sorting unit and the particle resorting unit are connected through a communication circuit so as to be cooperative with each other.

Further, the system includes a plurality of particle sorting units and a plurality of particle resorting units, and respective units are connected with communication path so that these units may be cooperative with one another.

Further, the system includes additionally means for communicating with an external device.

Further, in the system, the particle resorting unit is detachable from the particle sorting unit, and the particle sorting unit and the particle resorting unit are connected through an optical communication circuit so as to be cooperative with each other.

Further, in the system, the particle sorting unit is composed practically of a neuro-computer.

Further, in the system, means for storing further stores the displayed images along with results of correction, i.e., the displayed images and the results of correction, in the data file based on a third instruction for correcting the displayed results of sorting inputted into the input unit.

Further, in the system, the particle sorting unit generates the data representing features of the images of the particles contained in the liquid and the data showing optical characteristics of the particles based on the information on scattered light or fluorescence from the particles.

Further, in the system, the second instruction has information including data on the configuration of the particles in the liquid and data showing optical properties of the particles.

Further, in the system, uric sediment components are handled as the particles.

Further, in the system, the particle components in blood are handled as the particles.

According to an automatic particle image sorting system of the present invention, particle images and results of sorting stored in an apparatus are retrieved selectively in accordance with the designation by a user and displayed. Furthermore, the user can sort the displayed particle images in accordance with further detailed criteria based on the displayed contents. The results of resorting are stored in the apparatus together with the particle images. Accordingly, it is sufficient for the user only to perform the necessary minimum resorting operation.

The automatic particle sorting system of the present invention has a function of identifying respective particles and sorting them based on the particle images. Furthermore, the system makes resorting by a user possible. With this, improvement of sorting accuracy and sorting rate is achieved.

Furthermore, since means for communicating with external devices is implemented in the system, it is possible to make access to the data in the automatic particle sorting apparatus arranged in an inspection center from remote medical facilities or the like.

Furthermore, the system also has a function of correcting errors when the results of automatic sorting by the system include the errors.

Further, in the present system, the particle image resorting apparatus is detachable from the particle image sorting apparatus, and these apparatus are connected through a communication circuit so that both apparatus are cooperative with each other.

Thus, for example, it becomes possible to hold one particle image sorting apparatus in common by a plurality of particle image resorting apparatus located at remote locations. Further, it is possible to exchange data freely among these apparatus. With this, it is possible to realize flexible correspondence to diversification of medical configuration.

### BRIEF DESCRIPTION OF THE DRAWINGS

Fig. 1 is a block diagram of an automatic particle image sorting system according to the present invention;
Fig. 2 is a network diagram of a neuro-computer used in the automatic particle image sorting system shown in Fig. 1;
Fig. 3 is an explanatory diagram of a set picture of resorting items in the automatic particle image sorting system shown in Fig. 1;
Fig. 4 is an explanatory diagram showing a display picture of resorting in the automatic particle image sorting system shown in Fig. 1;
Fig. 5 is a flowchart of resorting in the automatic particle image sorting system shown in Fig. 1;
Fig. 6 is a block diagram of an automatic particle image sorting system according to another embodiment of the present invention;
Fig. 7 is a block diagram of an automatic particle image sorting system according to still another embodiment of the present invention; and
Fig. 8 is a block diagram of an automatic particle image sorting system according to still another embodiment of the present invention.

### DESCRIPTION OF THE PREFERRED EMBODIMENTS

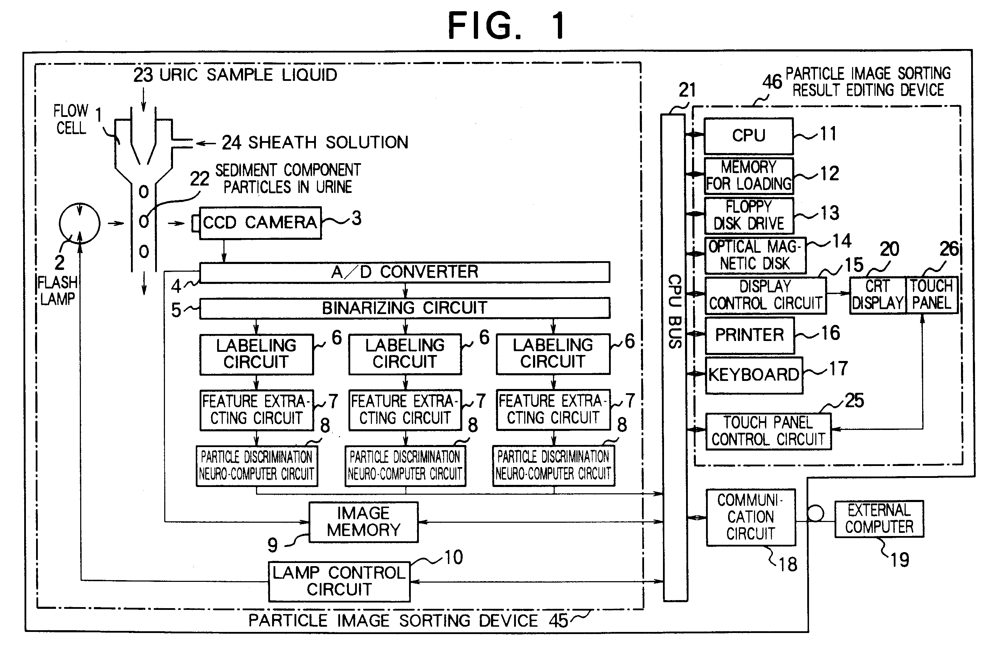

Embodiments of the present invention will be described hereinafter with reference to Fig. 1 to Fig. 8.

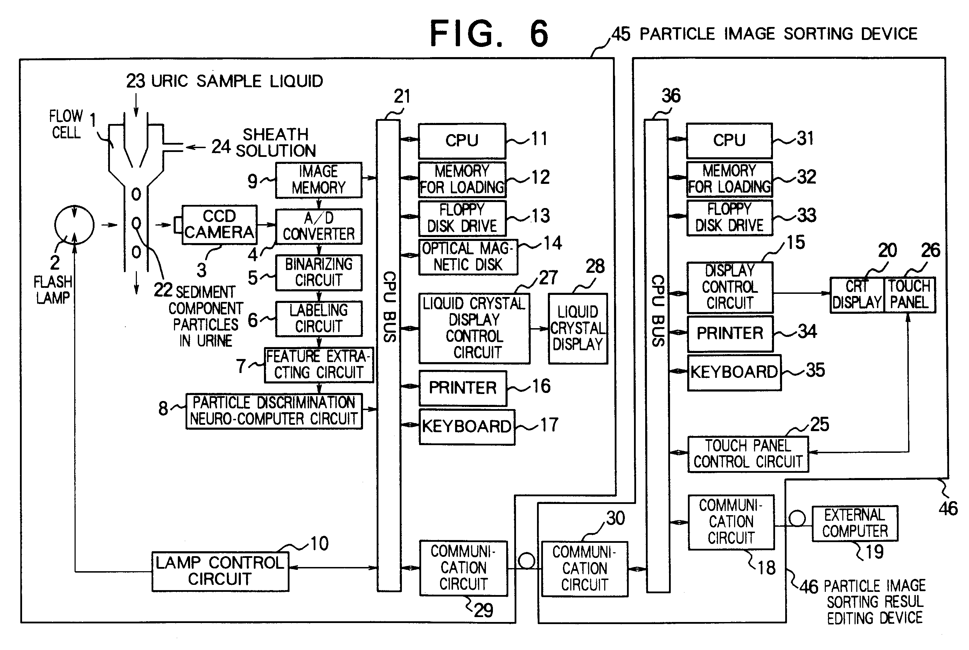

In Fig. 1, a thick solid line shows a scope within a cabinet, and the inside of a dashed line shows a scope of a functional block. Besides, the same is to be applied to Fig. 6 and thereafter showing second embodiment.

An automatic particle image sorting system according to the present invention is composed of a particle image sorting device 45 and a particle image resorting device 46. A system in which the particle image sorting device and the particle image resorting device are connected by a CPU bus so as to be formed in one body will be described hereinafter. The present system may be used for sorting precipitates in urine for instance as described hereinafter. Further, the image of the particles may be picked up by a method disclosed in Hitachi's case No. 119304308US1 the disclosure of which is hereby incorporated by reference.

An automatic particle image sorting system shown in Fig. 1 includes a flow cell 1, a flash lamp 2, a CCD camera 3, an AD converter 4, a binarizing circuit 5, labeling circuits 6, a feature extracting circuit 7, particle discrimination circuits 8, a memory for storing particle images and results of sorting (hereinafter referred to as an image memory) 9, a lamp control circuit 10, a CPU 11, a memory for loading 12, a floppy disk drive 13, a optical magnetic disk for filing (hereinafter referred to as a optical magnetic disk) 14, a display control circuit 15, a printer 16, a keyboard 17, a communication circuit 18, an external computer 19, a CRT display 20, a CPU bus 21, uric sediment component particles 22, uric sample liquid 23, a sheath liquid 24, a touch panel control circuit 25 and a touch panel 26.

Further, the particle sorting device 45 includes the flow cell 1, the flash lamp 2, the CCD camera 3, the AD converter 4, the binarizing circuit 5, the labeling circuits 6, the feature extracting circuits 7, the particle discrimination circuits 8, the image memory 9 and the lamp control circuit 10. The particle resorting device 46 includes the CPU 11, the memory for loading 12, the floppy disk drive 13, the optical magnetic disk 14 provided with file function, the display control circuit 15, the printer 16, the keyboard 17, the communication circuit 18, the CRT display 20, the touch panel control circuit 25 and the touch panel 26. The particle image sorting device 45 and the particle image resorting device 46 are connected by the CPU bus 21.

As shown in Fig. 1, a uric sample 23 for which sediment components are measured is mantled with a sheath solution 24 and made to flow in the flow cell 1. The uric sample 23 and the sheath solution 24 are made to flow by a liquid pump not shown, and the control thereof is made by the CPU 11.

The sediment component particles 22 in the uric sample 23 are made to flow in the flow cell 1 at almost the center thereof by means of the sheath solution 24.

The sediment component particles 22 in urine in the flow cell 1 is irradiated with a pulse light from the flash lamp 2, and converted into an image signal by means of the CCD camera 3. This image signal is converted into a digital signal by means of the AD converter 4 and stored in the image memory 9.

Further, the flash lamp 2 is operated by the CPU 11 controlling the lamp control circuit 10.

Image processing is performed by the binarizing circuit 5 that divides a color image by color thereby to convert it into a plurality of binary images, the labeling circuits 6 that apply numbering to sediment component images in the binary image, the feature extracting circuits 7 for obtaining feature quantities such as area, circumference, and mean density of respective colors RGB, and the particle discrimination circuits 8 for identifying sediment components from feature quantities. These constituents are connected to the CPU 11 through the CPU bus 21 and controlled by the CPU 11.

Furthermore, the memory for loading 12, the floppy disk drive 13, the optical magnetic disk 14, the image display circuit 15, the printer 16 and the keyboard 17 are connected to the CPU 11 through the CPU bus 21.

The CRT 20 for image display is connected to the image display circuit 15, and the touch panel 26 is installed on the CRT 20 for image display.

It is arranged so that an operator may perform operation in an interactive manner with the CRT 20 through the touch panel 26 by the touch panel control circuit 25.

The image data of the sediment component particles 22 that are converted into image signals by the CCD camera 3 and applied with A/D conversion by the AD converter 4 are converted into a plurality of binary images with the color as the reference in the binarizing circuit 5. A plurality of particle images exist sometimes in the binary images, and numbers are assigned to particle images in the next labeling circuit 6. Thereafter, the particle feature quantity in the binary images is computed by the feature extracting circuits 7, and the results thereof are inputted to the particle discrimination circuits 8, and the particles are identified and sorted automatically.

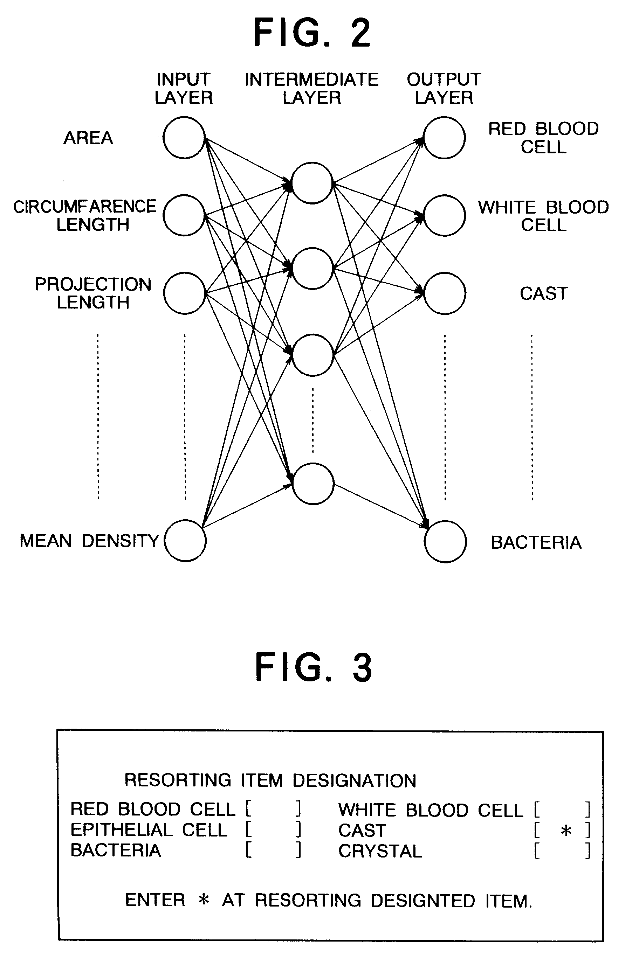

In the present embodiment, a neuro-computer is used for the particle discrimination circuit 8. Fig. 2 shows a network of a Rammelheart type neuro-computer having a three-layer structure. The inputs to the neuro-computer are feature parameters such as area and circumference, and the outputs are classifications results of particles such as red blood cells, white blood cells, epithelial cells, casts and bacteria.

Finer sorting, e.g., sorting of flat epithelial cells, translation epithelial cells and so on can also be made by increasing the number of nodes in the network. The largest value out of the output values of the neuro-computer is outputted as the result of sorting.

The results of sorting are stored in the photomagnetic disk 14 as one file together with the particle images in the image memory 9. Since a neuro-computer is used for sorting, the output values on respective sorting items are also filed together. At the same time, these results are displayed on the CRT 20 together with the particle images at time of resorting as described later.

Further, these results are outputted to the printer 16, and at the same time, it is arranged so that the CPU 11 may communicate with an external computer 19 through a communication circuit 18, thereby to transmit the sorted results or the like to the external computer 19 or to transmit anything unusual of an automatic sorting device or the like.

In a series of sorting operations described above, the designating operation is performed by the CPU 11 controlling respective constituents by the input from the keyboard 17 described above. The control program thereof has been inputted in the floppy disk 13, and is loaded in the memory 12 for loading and executed. Further, it is also possible to perform the designating operation with the touch panel 26 in the present embodiment.

As described previously, output values of the neuro-computer shown in Fig. 2 are used for sorting and discrimination of particle images in the present embodiment, where these values are outputted as a value from 0 to 1. The output value represents the accuracy of sorting.

Thus, by the input to an input device, those that have low output values are assumed to be the particles showing uncertain sorting, and only the particles showing output values at a certain value or lower of the output of the neuro-computer on the sorted items are taken as the objects of resorting.

With this, it is possible not only to compensate for uncertainty of sorting by the neuro-computer, but also to conduct learning of the neuro-computer using resorted results, thereby to contribute to the improvement of the accuracy of sorting.

A case that specific items of the results of automatic sorting have been selected in the resorted items described above will be described with reference to Figs. 3, 4 and 5.

The present embodiment shows an illustration when an operator resort in more detail with respect to the items such as casts and blood cells of uric sediment components.

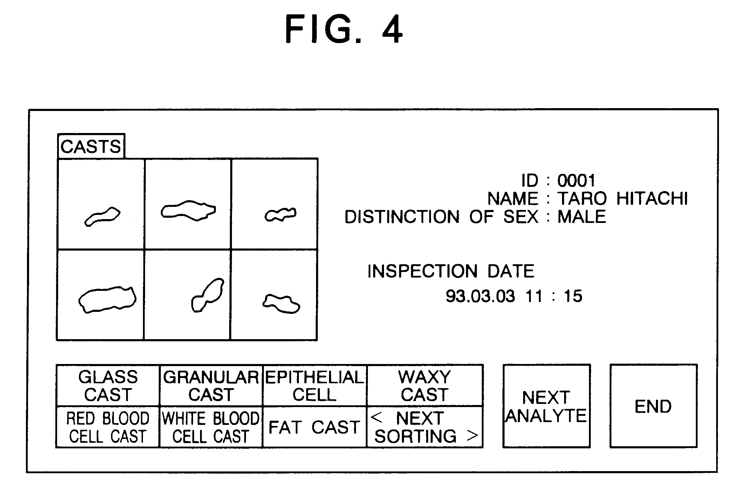

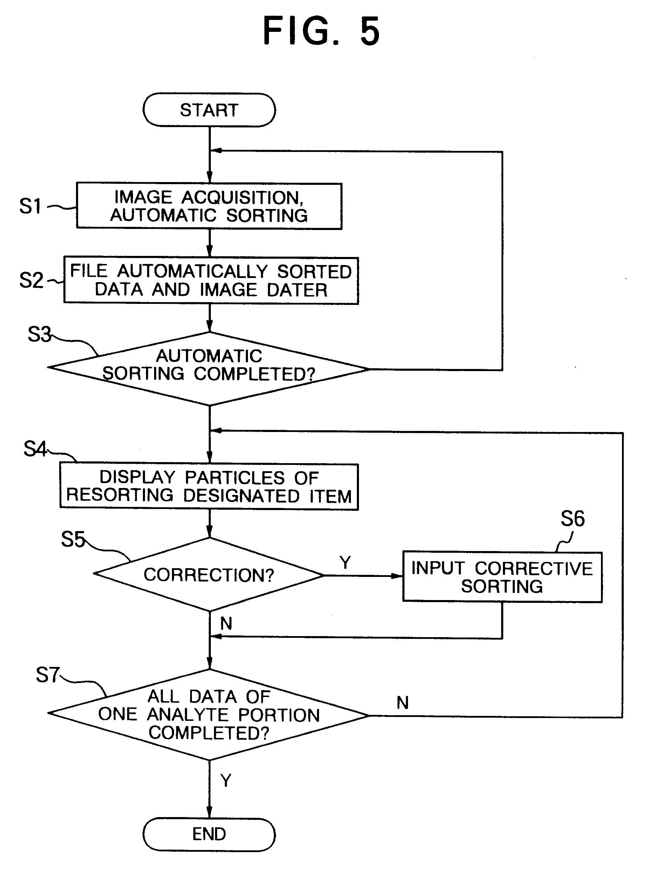

Fig. 3 shows an example of a set picture of specific items to be resorted, Fig. 4 shows an example of particle image display at time of resorting in accordance with the items shown in Fig. 3, and Fig. 5 shows a flowchart showing a process of resorting in the present embodiment. S1, S2, S3, S4, S5, S6 and S7 represent respective steps of sorting.

In the present embodiment, measurement is made on each analyte, and resorting of required items only is performed in accordance with input instructions by an operator. First, as shown in Fig. 3, resorting item designation is set in advance with a mark * on the set picture. Fig. 3 illustrates a case that cast particles are designated as the specific particles of the resorting object.

First, in a step S1, an image of sediment components in urine of a predetermined analyte quantity is acquired using the CCD camera 3 and the A/D converter 4 and automatic sorting is performed using a neuro-computer for the particle discrimination circuit 8.

In a step S2, the images and the results of automatic sorting of the sediment components in urine are filed in the optical magnetic disk 14, which is performed with respect to the particles of one analyte portion.

In a step S3, it is examined whether image collection has been completed or not with respect to the particles of one analyte portion, and the process is advanced to a next resorting step S4 when it has been completed.

In the present embodiment, since casts only are resorted as items are set previously in the resorting step S4, the executed picture of resorting is displayed as shown in Fig. 4.

Fig. 4 displays the type of casts and the images of sorted sediment components collectively, and displays to sort the casts to show the types of casts such as glass casts and granulation casts.

First, a user touches the cast images of the picture desired to sort, and then touches the touch panel 26. With this, the cast image touched by the user is selected and inputted in the device.

Next, the user touches the displayed items under the picture decided that the cast image is applicable based on visual decision. In such a manner, the cast images are resorted and inputted. The foregoing is confirmed under visual recognition by the user with respect to all of the cast images requiring resorting.

Next, in a step S5, resorting is decided under visual recognition of the operator as described above, but correction is made in a step S6 when there are errors or particle images impossible of decision in automatic sorting, and correction is required in the resorting.

In a step S7, when all of the displayed images are resorted, resorting data are filed in the photomagnetic disk 14, the position of "next analyte" is touched so as to advance the process to sorting of the next analyte or "end" is touched so as to complete sorting.

The resorting is performed through such a process. In the present embodiment, it is possible to perform resorting more effective than the first sorting.

The CPU 11 is able to display the images of the sediment components in urine, the results of automatic sorting and sorting data filed in the photomagnetic disk 14 on the image display portion.

An automatic particle sorting system according to another embodiments of the present invention will be described.

In a second embodiment, a particle sorting device 45 and a particle resorting device 46 are formed separately, and these two separate devices are connected to each other by a communication circuit. Since those elements that are affixed with the same reference numerals as Fig. 1 are equivalent to Fig. 1, the description thereof is omitted.

In Fig. 6, the structure of the particle sorting device 45 and the particle resorting device 46 is almost the same as the structure of the first embodiment in principle. Therefore, description will be made with points of difference as the center.

The particle sorting device 45 described above is provided with a functional structure of a particle sorting portion provided in the particle sorting device 45 of the first embodiment, the CPU 11, the memory for loading 12, the floppy disk drive 13, the photomagnetic disk 14, the printer 16, and the keyboard 17 provided in the particle resorting device 46 of the first embodiment, and a communication circuit 29 with the particle resorting device 46, and provided further with a liquid crystal display circuit 27 and a liquid crystal display 28 in addition to the above. These units are connected by a CPU bus 21.

The particle resorting device 46 is provided with a display circuit 15, a CRT display 20, a touch panel control circuit 25, a touch panel 26, a CPU 31, a memory for loading 32, a floppy disk drive 33, a printer 34, a keyboard 35, and a communication circuit 30 with the particle sorting device 45 provided in the particle resorting device 46 of the first embodiment. These units are connected by a CPU bus 36.

Furthermore, the particle sorting device 45 and the particle resorting device 46 are connected each other by the communication circuit 29 and the communication circuit 30 described above.

Since the function of the present embodiment is almost similar to that of the first embodiment, troublesome repeated description is omitted and characteristic functions are described.

In the particle sorting device 45 are provided the CPU 11, the memory for loading 12, the floppy disk drive 13 and the keyboard 17, and in the particle resorting device 46 are also provided the CPU 31, the memory for loading 32, the floppy disk drive 33 and the keyboard 35. Therefore, it is made possible to operate from both devices. However, the optical magnetic disk 14 for filing is disposed within the particle sorting device 45.

In the present embodiment, the images and the results of sorting of the designated specific particles are transmitted to the particle resorting device 46 by communication circuits 29 and 30 from the particle sorting device 45. In this case, only the sorting data on the preset specific items are transmitted on the side of the particle sorting device 45. Those data are stored in the optical magnetic disk 14 of the particle sorting device 45.

The resorting process with such a system structure is performed in an almost similar manner as the first embodiment.

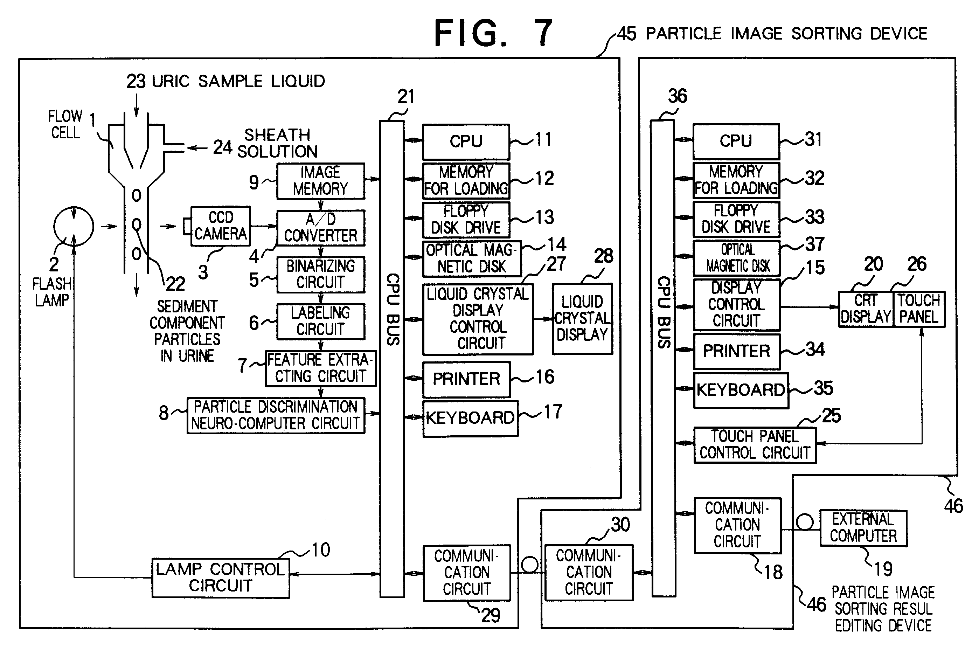

Next, a modified example of an automatic particle sorting system according to another embodiment of the present invention shown in the second embodiment will be described. The embodiment is the same in a point that the particle sorting device 45 and the particle resorting device 46 are formed separately, but the photomagnetic disk for filing is disposed in the particle resorting device 46, and the two separate devices are connected each other by a communication circuit. Fig. 7 is a block diagram of a modified example of an automatic particle sorting system according to the embodiment shown in Fig. 6.

In Fig. 7, the same reference numerals as those in Fig. 6 show equivalent parts. Hence, the description is omitted, and only new reference numerals are described. 37 represents a photomagnetic disk for filing.

Since the system structure described above is the same as that shown in Fig. 6, the detailed description thereof will be omitted.

In the present embodiment, the particle resorting device 46 is provided with all of the functions such as storage of particle images and results of sorting, designation of particle images to be resorted, setting of resorting and storage of resorting data. With the present structure, resorting is performed in a process almost similar to the first embodiment, thus performing similar function.

Further, in the above-mentioned embodiment, input/output units and display units such as the keyboard 17 and the keyboard 35, the printer 16 and the printer 34, and the liquid crystal display 28 and the CRT display 20 are provided on both device sides, respectively. Therefore, input/output operations and display can be performed from the sides of both devices described above, which is convenient.

Furthermore, in the present embodiment, it is possible to place the particle sorting device 45 and the particle resorting device 46 at a distance as separate devices. For example, when the particle resorting device 46 is placed on the doctor side, and the particle sorting device 45 on the inspection room side, it is convenient for prompt diagnosis and medical treatment.

Furthermore, it is possible to connect a plurality of particle resorting devices 46 and a plurality of particle sorting devices one another to perform processing, and to utilize sorting data at a plurality of locations, which is convenient for more prompt diagnosis and medical treatment.

An automatic particle sorting system according to still another embodiment will be described.

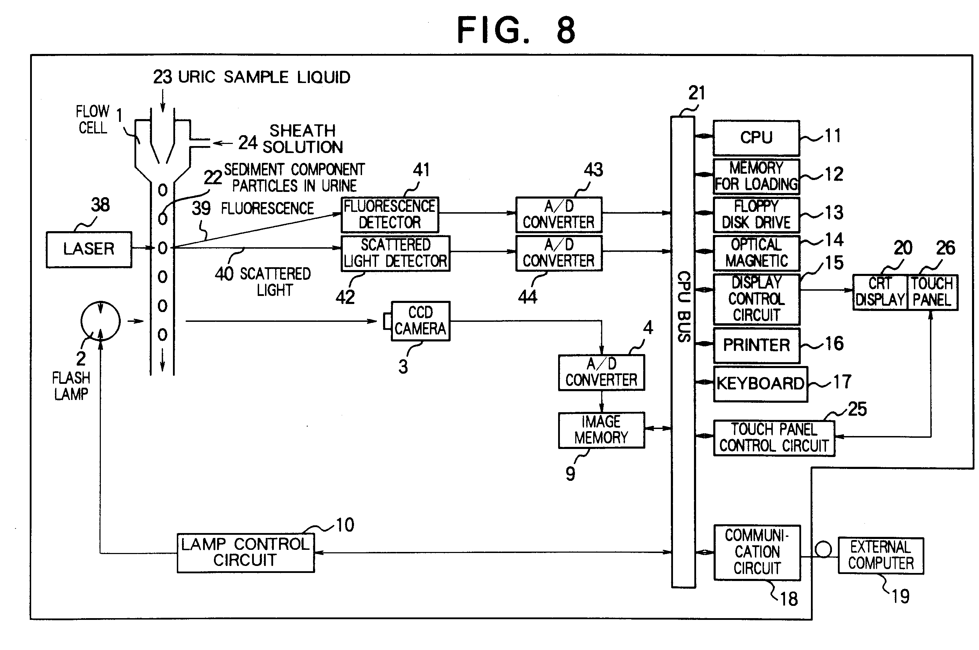

Fig. 8 is a block diagram showing an automatic particle sorting system according to still another embodiment of the present invention. The present embodiment is one in which particle dispersed light or fluorescent light is used for automatic sorting of particles. The particle sorting device and the particle resorting device of the present embodiment have almost the same structure as that of the automatic particle sorting system of the first embodiment shown in Fig. 1. In Fig. 8, since the same reference numerals as those in Fig. 1 represent equivalent parts, the description thereof is omitted, and only new reference numerals are described. 38 represents a laser, 39 fluorescent light, 40 dispersed light, 41 a fluorescent light detector, 42 a dispersed light detector, 43 an AD converter and 44 an AD converter.

Since the present embodiment is almost similar to the first embodiment shown in Fig. 1, and different characteristic portions will be described. When a scattered light or a fluorescent light is used in automatic particle image sorting as shown in Fig. 8, it is possible to perform sorting by combining other parameters of the particles and resorting functions with each other.

In the present embodiment, the particles are irradiated with laser light from the laser 38 and the particle images are sorted automatically using the fluorescent light 39 from a fluorescent dye that has dyed a part of the particles. It is possible to further improve sorting performance by performing sorting other than configuration automatically not depending on the image only, but by using parameters showing other particle features and performing sorting in point of configuration by an operator or by the operator and the particle sorting device while taking partial charge of the work.

## Claims

1. An automatic particle image sorting system comprising:
an input unit (1);
a particle image sorting unit (45), said particle image sorting unit (45) including:
sorting units (8) for sorting particle images (22) automatically based on information including data showing features of images of particles (22) contained in a liquid sample (23) and data showing optical characteristics of said particles (22), and
an image storage unit (9) for storing images and said results of sorting of said particle images (22);
a particle image resorting device (46), said particle image resorting device (46) including:
a data file unit (14), and
an image display unit (20);
means (8) for displaying the images and the results of said sorting of said particle images (22) on said image display unit (20) based on a first instruction for designating the images and the results of said sorting of said particle images (22) stored in said image storage unit (9) that are inputted into said input unit (1); and
means (11) for storing said displayed images together with the results of resorting, said displayed images and said results of resorting in said data file (14) based on a second instruction for further sorting particles (22) inputted in said input unit (1), for which said images and results of sorting are displayed.

2. An automatic particle image sorting system according to Claim 1, further comprising means for transmitting the images and the results of said sorting of said particle images (22) stored in said image storage portion (9) to said data file unit (14), and for displaying the images and the results of said sorting of said particle images (22) in the data file unit (14) on said image display unit (20) based on said first instruction.

3. An automatic particle image sorting system comprising:
an input unit (1);
a particle image sorting unit (45), said particle image sorting unit (45) including:
sorting units (8) for sorting particles (22) automatically based on information including data showing features of images of particles (22) contained in a liquid sample (23) and data showing optical characteristics of said particles (22), and
an image storage unit (9) for storing images and said results of sorting of said particle images (22);
a particle image resorting device (46), said particle image resorting device (46) including:
an image display unit (20);
means (8) for displaying the images and the results of said sorting of said particle images (22) on said image display unit (20) based on a first instruction for designating the images and the results of said sorting of said particle images (22) stored in said image storage unit (9) that are inputted into said input unit (1); and
means (11) for storing said displayed images together with the results of resorting, said displayed images and said results of resorting in said image storage unit based on a second instruction for further sorting particle images (22) inputted in said input unit (1), for which said images and results of sorting are displayed.

4. An automatic particle image sorting system according to Claim 1, wherein said particle image resorting unit (46) is detachable from said particle sorting unit (45), and said particle sorting unit (45) and said particle resorting unit (46) are connected by a communication circuit (21) so as to be cooperative with each other.

5. An automatic particle image sorting system according to Claim 1, further comprising a plurality of said particle image sorting units (45) and a plurality of said particle image resorting units (46), wherein said respective units are connected by communication paths so that said units are cooperative with one another.

6. An automatic particle image sorting system according to Claim 1, further comprising means (18) for performing communication with external devices (19).

7. An automatic particle image sorting system according to Claim 1, wherein said particle image resorting unit (46) is detachable from said particle image sorting unit (45), and said particle image sorting unit (45) and said particle image resorting unit (46) are connected by an optical communication circuit so as to be cooperative with each other.

8. An automatic particle image sorting system according to Claim 1, wherein said particle image sorting unit (8) is composed practically of a neuro-computer, and in said particle image sorting unit (8), information including data showing features of images of particles (22) contained in a liquid sample (23) and data showing optical characteristics of said particles (22) is inputted in said neuro-computer and said neuro-computer outputs the results of sorting of said particles (22).

9. An automatic particle image sorting system according to Claim 1, wherein said means for storing (11) further stores said displayed images and said results of correction in said data file (14) associating the results of correction with said displayed images, based on a third instruction for correcting said displayed results of sorting inputted into said input unit.

10. An automatic particle image sorting system according to Claim 1, wherein said particle image sorting unit (45) generates said data showing features of the images of the particles (22) contained in the liquid sample (23) and said data showing optical characteristics of the particles (22) based on information related to the scattered light (40) or the fluorescent light (39) from said particles (22).

11. An automatic particle image sorting system according to Claim 1, wherein said second instruction has information including data related to configuration and data showing optical properties of said particles (22) in said liquid sample (23).

12. An automatic particle image sorting system according to Claim 1, wherein said particles (22) are uric sediment components.

13. An automatic particle image sorting system according to Claim 1, wherein said particles (22) are particle components in blood.

14. An automatic particle image sorting system comprising:
means (3) for picking up images of particles (22) contained in a liquid sample (23);
storage means (9);
means (8) for assigning first identifying information to said picked up images and storing the images in said storage means (9);
means (15) for displaying images stored in said storage means (9) together with said first identifying information; and
means (26) for further assigning second identifying information to said displayed images and storing the images in said storage means (9).
